# EUROPÄISCHE PATENTANMELDUNG

(11) **EP 2 367 081 A2**
(43) Veröffentlichungstag der Anmeldung: **21.09.2011**
(21) Anmeldenummer: 11001520.3
(22) Anmeldetag: 24.02.2011
(51) Int. Cl.: G05B 9/03

(54) **Steuerungssystem für elektromotorisch betätigbare Verstelleinrichtungen sowie Verfahren zum Erzeugen von fehlersicheren Steuersignalen für elektromotorisch betätigbare Verstelleinrichtungen**

(30) Priorität: 18.03.2010 DE 102010011938
(71) Anmelder: ilcon GmbH, 57258 Freudenberg (DE)
(72) Erfinder: Hüppe, Michael, 51647 Gummersbach (DE); Kritzler, Michael, 51647 Gummersbach (DE)
(74) Vertreter: Polypatent

(57) **Zusammenfassung**

Die Erfindung betrifft ein Steuerungssystem für elektromotorisch betätigbare Verstelleinrichtungen für Betten, insbesondere für Krankenhausbetten, Pflegebetten oder dergleichen, sowie ein Verfahren zum Erzeugen von fehlersicheren Steuersignalen für elektromotorisch betätigbare Verstelleinrichtungen für Betten, insbesondere für Krankenhausbetten, Pflegebetten oder dergleichen, mit wenigstens einem Steuergerät und wenigstens einer Bedieneinrichtung, umfassend einen Patienten-Handschalter, wobei das Verfahren die Überwachung und Verarbeitung von Ausgangssignalen der Bedieneinrichtung und das Erzeugen von Steuersignalen in dem Steuergerät anhand von Ausgangssignalen der Bedieneinrichtung umfasst, wobei das Überwachen und Verarbeiten der Ausgangssignale zumindest teilweise mittels wenigstens eines Prozessors in dem Steuergerät erfolgt und sich das Verfahren dadurch auszeichnet, dass an der Bedieneinrichtung zusätzlich wenigstens ein Steuersignal unmittelbar erzeugt wird, welches unter Umgehung des Prozessors eine Freigabe oder Sperrung wenigstens einer Verstelleinrichtung bewirkt.

## Beschreibung

Die Erfindung betrifft ein Steuerungssystem für elektromotorisch betätigbare Verstelleinrichtungen für Betten, insbesondere für Krankenhausbetten, Pflegebetten oder dergleichen, wenigstens umfassend ein Steuergerät, wenigstens eine Stromversorgung sowie wenigstens einen Patienten-Handschalter mit Betätigungselementen zur Erzeugung von Steuerbefehlen, wobei der Patienten-Handschalter über wenigstens zwei Signalleitungen an das Steuergerät angeschlossen ist und das Steuergerät wenigstens einen Prozessor zur Erzeugung von Schaltbefehlen zwecks Ansteuerung der Verstelleinrichtungen umfasst, wobei wenigstens eine Signalleitung für die Übertragung eines Freigabesignals von dem Patienten-Handschalter an das Steuergerät vorgesehen ist.

Die Erfindung betrifft weiterhin ein Verfahren zum Erzeugen von fehlersicheren Steuersignalen für elektromotorisch betätigbare Verstelleinrichtungen für Betten, insbesondere für Krankenhausbetten, Pflegebetten oder dergleichen, mit wenigstens einem Steuergerät und wenigstens einer Bedieneinrichtung, umfassend einen Patienten-Handschalter, wobei das Verfahren folgende Schritte umfasst:
- Überwachen und Verarbeiten von Ausgangssignalen der Bedieneinrichtung,
- Erzeugen von Steuersignalen in dem Steuergerät anhand von Ausgangssignalen der Bedieneinrichtung, wobei das Überwachen und Verarbeiten der Ausgangssignale zumindest teilweise mittels wenigstens eines Prozessors in dem Steuergerät erfolgt.

Ein Verfahren zum Erzeugen von fehlerfesten Steuersignalen für einen elektromotorischen Möbelantrieb ist beispielsweise aus der DE 10 2007 054 422 A1 bekannt. Diese Druckschrift beschreibt ein Verfahren zum Erzeugen von erstfehlersicheren und fehlerfesten Steuersignalen, mindestens einer Bedienungseinheit eines elektromotorischen Antriebs für ein Möbel mit einer Steuervorrichtung und einer Sicherheitsvorrichtung, wobei das Verfahren die Verfahrensschritte "Überwachen und Verarbeiten von Ausgangssignalen der Bedieneinheit mittels einer Zentraleinheit und Erzeugen von erstfehlersicheren und fehlerfreien Steuersignalen anhand der verarbeiteten Ausgangssignale mittels der Zentraleinheit" umfasst, wobei das Überwachen und Verarbeiten der Eingangssignale parallel durch zumindest zwei programmierbare Controllereinrichtungen erfolgt, welche sich gegenseitig überwachen. Das Verfahren umfasst weiterhin das Erzeugen der Ansteuersignale erst nach einer Aktivierung mittels eines separaten Freigabesignals von einer Bedieneinheit über eine separate Leitung zur Freigabe des Erzeugens von Ansteuersignalen.

Insbesondere für den Einsatz von Betten im Pflegebereich bzw. im Krankenhausbereich und in der Intensivmedizin werden üblicherweise, anders als bei privat genutzten Schlafmöbeln, viele verschiedene Bewegungsvorgänge mit verschiedenen Antrieben gesteuert. Darüber hinaus sind bei derartigen Einrichtungen nicht alle Verstellvorgänge für den in dem Bett befindlichen Patienten verfügbar. Üblicherweise sind die Bewegungsvorgänge von Krankenhausbetten mittels eines sogenannten Patientenhandschalters steuerbar, wobei dem Patienten normalerweise nur eine beschränkte Anzahl von Betätigungsfunktionen zur Auswahl stehen.

So wie dies auch in der DE 10 2007 054 422 beschrieben ist, sind bestimmte Schaltfunktionen des Patienten-Handschalters vom Pflegepersonal sperrbar bzw. freigebbar. Oftmals sind neben dem Patienten-Handschalter weitere Betätigungs- bzw. Bedieneinrichtungen vorhanden, die nur für das Pflegepersonal erreichbar sind.

Beispielsweise bei Patienten in intensivmedizinischer Betreuung soll eine Betätigung von Verstelleinrichtungen durch den Patienten überhaupt nicht möglich sein. Auch ist bei solchen Einrichtungen unbedingt sicherzustellen, dass keine versehentliche Betätigung der Verstelleinrichtung erfolgt.

Im Medizin- und Pflegebereich spielt daher die sogenannte Erstfehlersicherheit von Schaltelementen der Bediendungseinheiten eine herausragende Rolle. Diese Erstfehlersicherheit wird beispielsweise durch eine bestimmte mechanische Schaltzuverlässigkeit gewährleistet. Weiterhin muss eine sogenannte Fehlerfestigkeit gegeben sein, d. h. es dürfen keine Fehlfunktionen auf Grund von Bedienungsfehlern oder unlogischen Betätigungseingaben auftreten.

Um diesen Anforderungen gerecht zu werden, wird in der DE 10 2007 054 422 insbesondere vorgeschlagen, in einer Steuereinheit die Überwachung und Verarbeitung der Eingangssignale einer Bediendungseinheit mittels zweier programmierbarer Controllereinrichtungen, d. h. zweier programmierbarer Mikroprozessoren, durchzuführen, die sich gegenseitig überwachen. Auf diese Art und Weise soll sichergestellt werden, dass alle von Bedienungseinheiten initiierten Schaltvorgänge mit nicht erstfehlersicheren Bauelementen überwacht, überprüft und erstfehlersicher weitergeleitet werden, wobei im Falle von Fehlern keine Weiterleitung erfolgt bzw. Gefahren ausgeschlossen werden.

Eine solche Lösung stellt insbesondere auf die Fehlbedienbarkeit von Bedienungseinheiten ab, trägt aber einem elektronischen Versagen oder etwa der Erzeugung von Fehlsignalen auf Grund von elektrostatischen Entladungen oder dergleichen nicht hinreichend Rechnung. Als zusätzliche Sicherungsmaßnahme wird in der DE 10 2007 054 422 vorschlagen, eine separate Signalleitung zwischen einer Bedienungseinheit und einer Steuervorrichtung vorzusehen, wobei das von der Bedienungseinheit erzeugte Freigabesignal in einer programmierbaren Kontrolleinrichtung überwacht und verarbeitet wird. Auch diese Lösung trägt nur der Fehlbediendungssicherheit Rechnung, gewährt aber keine hinreichende Sicherheit gegen etwaige Elektronikfehlfunktionen wie beispielsweise auch Fehlprogrammierungen der Controllereinrichtungen.

Aus der DE 10 2005 031 820 B4 ist eine Handbedienung für elektromotorische Verstellantriebsvorrichtungen zur Verstellung von Teilen von Möbeln im Pflege-oder Hospitalbereich bekannt, welche wenigstens einen Antriebsmotor und eine Steuereinrichtung aufweist, wobei die Handbedienung Bedienungstasten zur Betätigung eines ausgewählten Möbelteils in einer gewünschten Verstellrichtung und eine Schalteranordnung zum Sperren bestimmter Bedienungsfunktionen aufweist. Das von der Schalteranordnung zum Sperren bestimmter Bedienungsfunktionen erzeugte Schaltsignal wird auch bei dieser Anordnung über eine Verbindungsstrecke an eine Steuerung übertragen, an welche die Verstellmotoren des Möbels angeschlossen sind. Auch diese Anordnung trägt einer Fehlfunktion der Steuerung selbst nicht Rechnung.

Die Schalteranordnung an dem Patienten-Handschalter umfasst ein Betätigungselement, welches als schaltbare Drehscheibe ausgebildet ist, in die ein Übertragungselement in Form eines Dauermagneten eingesetzt ist, um in bestimmten Stellungen jeweils einen Riedkontakt zu aktivieren. Eine solche Anordnung ist ebenfalls potentiell fehlerbehaftet, insbesondere bei Erzeugung von Fehlerströmen durch elektrostatische Entladungen.

Der Erfindung liegt daher die Aufgabe zu Grunde, ein Steuerungssystem der eingangs genannten Art sowie ein Verfahren zum Erzeugen von fehlersicheren Steuersignalen bereitzustellen, welche insbesondere im Hinblick auf die Erzeugung von erstfehlersicheren Steuersignalen verbessert sind. Insbesondere sollen die vorstehend beschriebenen Nachteile behoben werden.

Die Aufgabe wird zunächst gelöst durch ein Steuerungssystem für elektromotorisch betätigbare Verstelleinrichtungen für Möbel, insbesondere für Betten, insbesondere für Krankenhausbetten, Pflegebetten oder dergleichen, umfassend wenigstens ein Steuergerät, wenigstens eine Stromversorgung sowie wenigstens einen Patienten-Handschalter mit Betätigungselementen zur Erzeugung von Steuerbefehlen, wobei der Patienten-Handschalter über wenigstens zwei Signalleitungen an das Steuergerät angeschlossen ist und das Steuergerät wenigstens einen Prozessor zur Erzeugung von Schaltbefehlen zwecks Ansteuerung der Verstelleinrichtungen umfasst, wobei eine Signalleitung für die Übertragung eines Freigabesystems von dem Patienten-Handschalter an das Steuergerät vorgesehen ist, wobei sich das Steuerungssystem gemäß der Erfindung dadurch auszeichnet, dass die Signalleitung zur Übertragung des Freigabesignals unmittelbar, d. h. unter Umgehung einer Controllereinrichtung bzw. eines Prozessors/Mikroprozessors an eine Schalteinrichtung zur Betätigung wenigstens einer Verstelleinrichtung angeschlossen ist.

Über eine solche Signalleitung kann beispielsweise ein separates Relais in einer Steuerung oder in einer Netzfreischaltung aktiviert werden. Ohne dieses Signal kann keine Verstelleinrichtung bzw. kein Antrieb gefahren werden, unabhängig davon, welche Signale von dem Prozessor bzw. von der Controllereinrichtung vorliegen.

Vorzugsweise ist die Signalleitung zur Übertragung des Freigabesignals unmittelbar an eine Schalteinrichtung zur Spannungsfreischaltung wenigstens einer Verstelleinreinrichtung, vorzugsweise aller vorhandenen Verstelleinrichtungen, angeschlossen.

Es ist vorgesehen, dass die Verstelleinrichtungen bei nicht betätigter Schalteinrichtung netzfrei bzw. spannungsfrei sind, und dass zeitgleich mit dem betreffenden Tastenbefehl für die Verstellung eines bestimmten Beschlagteils an dem Möbel ein Freigabesignal erzeugt wird, welches eine Freischaltung einer oder mehrerer Verstelleinrichtungen bewirkt.

Zweckmäßigerweise umfasst der Patienten-Handschalter wenigstens eine Schalteranordnung zum Sperren bestimmter Bedienungsfunktionen.

Die Schalteranordnung zum Sperren von Bedienungsfunktionen kann beispielsweise ein mechanisch verriegelbares Betätigungselement umfassen.

Alternativ zu der Erzeugung des Freigabesignals durch ein Betätigungselement an einem Patienten-Handschalter kann das Freigabesignal auch an einer zusätzlichen Bedieneinheit, die nur für das Pflegepersonal erreichbar ist, erzeugbar sein.

Bei einer bevorzugten Variante des Steuerungssystems gemäß der Erfindung ist vorgesehen, dass das Betätigungselement unmittelbar mechanisch die Schaltfunktion bewirkt. Dies trägt insbesondere der Anforderung nach Fehlerfestigkeit Rechnung.

Bei einer weiteren bevorzugten Variante des Steuerungssystems nach der Erfindung ist vorgesehen, dass eine Bedienung wenigstens eines oder jedes Betätigungselements, beispielsweise in Form einer Taste an dem Patienten-Handschalter oder an einer weiteren Bedieneinrichtung, die Übertragung eines Freigabesignals zeitgleich mit einem Steuerbefehl bewirkt. Das Freigabesignal wird zweckmäßigerweise über eine separate Signalleitung übertragen.

Zusätzlich ist eine Verriegelung von allen Tasten oder von Tastengruppen bzw. von allen Betätigungselementen oder Gruppen von Betätigungselementen durch einen Verriegelungsschalter möglich. Beispielsweise kann ein Verriegelungsschalter drei Schaltpositionen mit jeweils zwei Tasten in Serie umfassen.

Die der Erfindung zu Grunde liegende Aufgabe wird weiterhin gelöst durch ein Verfahren zum Erzeugen von fehlersicheren Steuersignalen für elektromotorisch betätigbare Verstelleinrichtungen für Betten, insbesondere für Krankenhausbetten, Pflegebetten oder dergleichen, mit wenigstens einem Steuergerät und wenigstens einer Bedieneinrichtung, wobei die Bedieneinrichtung wenigstens einen Patienten-Handschalter umfasst, wobei das Verfahren folgende Schritte umfasst:
- Überwachen und Verarbeiten von Ausgangssignalen der Bedieneinrichtung,
- Erzeugen von Steuersignalen in dem Steuergerät anhand von Ausgangssignalen der Bedieneinrichtung, wobei das Überwachen und Verarbeiten der Ausgangssignale zumindest teilweise mittels wenigstens eines Prozessors in dem Steuergerät erfolgt, wobei sich das Verfahren dadurch auszeichnet, dass an der Bedieneinrichtung zusätzlich wenigstens ein Steuersignal unmittelbar erzeugt wird, welches unter Umgehung des Prozessors eine Freigabe oder Sperrung wenigstens einer Verstelleinrichtung bewirkt.

Der Erfindung liegt die Erkenntnis zu Grunde, dass die Verwendung von Prozessoren, insbesondere von Mikroprozessoren, die für Funktionen wie Synchronlauf, Ablaufsteuerung oder Softcontrol unabdingbar sind, grundsätzlich gewisse Sicherheitsrisiken birgt, insbesondere im Hinblick auf die Fehlersicherheit der Signale.

Aus diesem Grund wird in der Bedieneinrichtung, beispielsweise in dem Patienten-Handschalter, zusätzlich wenigstens ein Steuersignal ummittelbar erzeugt, welches unter Umgehung des Prozessors eine Schalteinrichtung für eine Verstelleinrichtung, beispielsweise einen elektromotorischen Antrieb betätigt.

Eine bevorzugte Variante des Verfahrens zeichnet sich dadurch aus, dass die Ansteuerung einer Netzfreischaltung wenigstens einer Verstelleinrichtung unmittelbar über das zusätzliche Steuersignal erfolgt.

Das zusätzliche Steuersignal kann beispielsweise als Freigabesignal für eine Netzfreischaltung wenigstens einer Verstelleinrichtung verwendet werden. Freigabesignal im Sinne der Erfindung bedeutet, dass die Verstelleinrichtung bzw. wenigstens ein Antrieb in nicht betätigtem Zustand grundsätzlich netzfrei bzw. spannungsfrei ist, so dass in jedem Falle die Erzeugung eines zusätzlichen Signals zur Freigabe, d. h. zur Spannungsbeaufschlagung der Verstelleinrichtung, erforderlich ist.

Sowohl der Patienten-Handschalter als auch eine andere Bedieneinheit sowie das Steuergerät gemäß der Erfindung können sowohl einen oder mehrere redundante, sich jeweils gegenseitig überprüfende Mikroprozessoren umfassen.

Ein Beispiel eines erfindungsgemäßen Steuerungssystems wird nachstehend anhand eines beigefügten Prinzipschaltbilds erläutert. Das Steuerungssystem gemäß der Erfindung umfasst wenigstens einen Handschalter 1 (Patienten-Handschalter), eine Spannungsquelle 2 und eine Steuereinheit 3, welche auf Antriebe 4 nicht eingestellter Verstelleinrichtungen an einem Möbel, beispielsweise an einem Krankenhausbett, einwirken.

Der Handschalter 1, die Spannungsquelle 2, die Steuereinheit 3 sowie die Antriebe 4 sind in üblicher Art und Weise über eine Verkabelung miteinander verbunden. Das Steuerungssystem gemäß der Erfindung kann eine oder mehrere Bedieneinheiten umfassen, welche nicht dargestellt sind.

Der Handschalter 1, der in üblicher Art und Weise als Handgerät mit Folientastatur ausgebildet sein kann, umfasst mehrere Tastschalter S1 bis S10 sowie zwei Verriegelungsschalter S11 und S12, wobei jeder der Tastschalter S1 bis S10 einem Betätigungselement zur Verstellung eines bewegbaren Möbelteils zugeordnet ist. An dieser Stelle sei erwähnt, dass die Antriebe 4 jeweils auf bestimmte Beschlagelemente des Möbels einwirkende Aktuatoren zugeordnet sind (Verstelleinrichtung).

Die Verriegelungsschalter S11 und S12 sind in Reihe geschaltet und unterbrechen im geöffneten Zustand die Spannungsversorgung 12 sowohl eines in dem Handschalter 1 angeordneten ersten Mikroprozessors 5 als auch eines in der Steuereinheit 3 angeordneten zweiten Mikroprozessors 6. Der erste Mikroprozessor 5 und der zweite Mikroprozessor 6 sind über eine serielle Datenleitung 7 miteinander verbunden. Über die Tastschalter S1 bis S10 werden in dem Handschalter 1 als Bedieneinrichtung mit Hilfe des ersten Mikroprozessors 5 Steuersignale erzeugt, die von dem zweiten Mikroprozessor 6 in der Steuereinheit 3 überwacht und ausgewertet werden sowie in Schaltbefehlen an die den Antrieben 4 zugeordneten Schalter 8 weitergeleitet werden. Parallel zu der seriellen Datenleitung 7 ist eine zweite Signalleitung 9 zwischen dem Handschalter 1 und der Steuereinheit 3 vorgesehen, über die jeweils bei Betätigung eines der Tastschalter S1 bis S10 ein paralleles Freigabesignal an ein Relais 10 erzeugt wird. Das Relais 10 ist bei nicht betätigten Tastschaltern S1 bis S10 geöffnet, bei Betätigung wird eine Spannungsversorgung 11 von der Spannungsquelle 2 zu den Antrieben 4 geschlossen.

Bei Betätigung eines der Tastschalter S1 bis S10 wird immer von dem ersten Mikroprozessor 5 ein Ausgangssignal mit entsprechendem Schaltbefehl an den zweiten Mikroprozessor 6 in der Steuereinheit 3 über die serielle Datenleitung 7 weitergegeben. Parallel hierzu wird über die zweite Signalleitung 9 ein Freigabesignal erzeugt, welches über das Relais 10 die Spannungsversorgung 11 von der Spannungsquelle 2 an die Schalter 8 freischaltet, so dass eine Betätigung dieser über den zweiten Mikroprozessor 6 zwecks Ansteuerung der Antriebe 4 bzw. der Verstelleinrichtungen möglich ist.

Über die Verriegelungsschalter S11 und S12 lässt sich die Spannungsversorgung 12 zu den Tastschaltern S1-S10 unterbrechen. Dies erfolgt üblicherweise durch einen Schlüssel des Bedienpersonals, der speziell zur Betätigung der Verriegelungsschalter S11 und S12 ausgebildet ist. Bei geöffneten Verriegelungsschaltern S11 und S12 können ein oder mehrere Tastschalter gruppenweise gesperrt sein. Bei dem schematisch dargestellten Ausführungsbeispiel sind alle Tastschalter S1 bis S10 verriegelt dargestellt. Die Anzahl der Tastschalter S1-S10 sowie die Anzahl der Verriegelungsschalter S11 und S12 ist für die Erfindung nicht kritisch. Der Verriegelungsschalter S11-S12 ist als redundante Schalteranordnung ausgebildet.

### Bezugszeichenliste

- 1: Handschalter
- 2: Spannungsquelle
- 3: Steuereinheit
- 4: Antriebe
- S1-S10: Tastschalter
- S11, S12: Verriegelungsschalter
- 5: erster Mikroprozessor
- 6: zweiter Mikroprozessor
- 7: serielle Datenleitung
- 8: Schalter
- 9: zweite Signalleitung
- 10: Relais
- 11: Spannungsversorgung
- 12: Spannungsversorgung

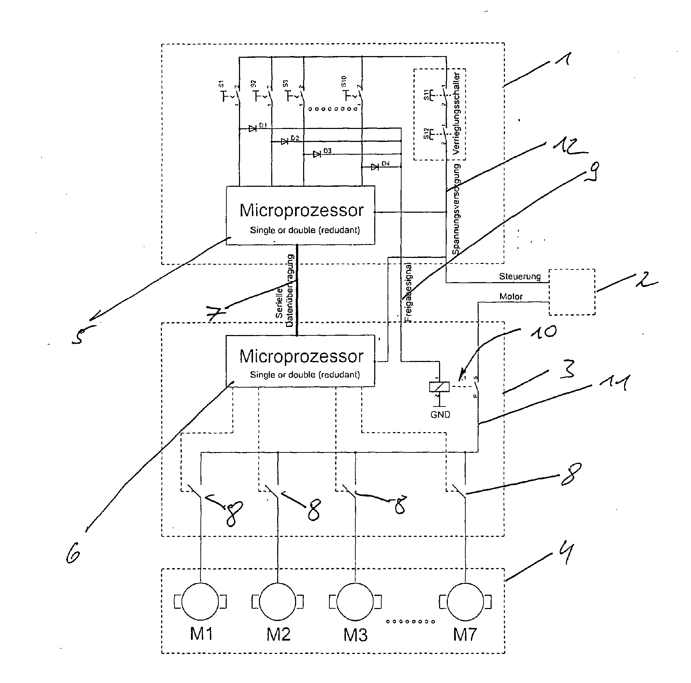

## Patentansprüche

1. Steuerungssystem für elektromotorisch betätigbare Verstelleinrichtungen für Betten, insbesondere für Krankenhausbetten, Pflegebetten oder dergleichen, umfassend wenigstens ein Steuergerät (3), wenigstens eine Stromversorgung sowie wenigstens einen Patienten-Handschalter (7) mit Betätigungselementen zur Erzeugung von Steuerbefehlen, wobei der Patienten-Handschalter (7) über wenigstens zwei Signalleitungen (7, 9) an das Steuergerät angeschlossen ist und das Steuergerät wenigstens einen Prozessor (6) zur Erzeugung von Schaltbefehlen zwecks Ansteuerung der Verstelleinrichtungen umfasst, wobei eine Signalleitung (9) für die Übertragung eines Freigabesignals von dem Patienten-Handschalter (7) an das Steuergerät vorgesehen ist, **dadurch gekennzeichnet, dass** die Signalleitung zur Übertragung des Freigabesignals unmittelbar an eine Schalteinrichtung zur Betätigung wenigstens einer Verstelleinrichtung angeschlossen ist.

2. Steuerungssystem nach Anspruch 1, **dadurch gekennzeichnet, dass** die Signalleitung (9) zur Übertragung des Freigabesignals unmittelbar an eine Schalteinrichtung zur Spannungsfreischaltung wenigstens einer Verstelleinrichtung, vorzugsweise aller Verstelleinrichtungen, angeschlossen ist.

3. Steuerungssystem nach einem der Ansprüche 1 oder 2, **dadurch gekennzeichnet, dass** der Patienten-Handschalter (7) mindestens eine Schalteranordnung (S11, S12) zum Sperren bestimmter Bedienungsfunktionen aufweist.

4. Steuerungssystem nach Anspruch 3, **dadurch gekennzeichnet, dass** die Schalteranordnung (S11, S12) zum Sperren von Verriegelungsfunktionen ein mechanisch verriegelbares Betätigungselement umfasst.

5. Steuerungssystem nach Anspruch 4, **dadurch gekennzeichnet, dass** das Betätigungselement unmittelbar mechanisch die Schaltfunktion bewirkt.

6. Steuerungssystem nach einem der Ansprüche 1 bis 6, **dadurch gekennzeichnet, dass** eine Bedienung wenigstens eines Betätigungselements, vorzugsweise jedes Betätigungselements, die Übertragung eines Freigabesignals zeitgleich zu einem Steuerbefehl bewirkt.

7. Verfahren zum Erzeugen von fehlersicheren Steuersignalen für elektromotorisch betätigbare Verstelleinrichtungen für Betten, insbesondere für Krankenhausbetten, Pflegebetten oder dergleichen, mit wenigstens einem Steuergerät und wenigstens einer Bedieneinrichtung, wobei die Bedieneinrichtung wenigstens einen Patienten-Handschalter umfasst, wobei das Verfahren folgende Schritte umfasst:
- Überwachen und Verarbeiten von Ausgangssignalen der Bedieneinrichtung,
- Erzeugen von Steuersignalen in dem Steuergerät anhand von Ausgangssignalen der Bedieneinrichtung, wobei das Überwachen und Verarbeiten der Ausgangssignale zumindest teilweise mittels wenigstens eines Prozessors in dem Steuergerät erfolgt, **dadurch gekennzeichnet, dass** an der Bedieneinrichtung zusätzlich wenigstens ein Steuersignal unmittelbar erzeugt wird, welches unter Umgehung des Prozessors eine Freigabe oder Sperrung wenigstens einer Verstelleinrichtung bewirkt.

8. Verfahren nach Anspruch 7, **gekennzeichnet durch** die Ansteuerung einer Netzfreischaltung wenigstens einer Verstelleinrichtung unmittelbar über das zusätzliche Steuersignal.

9. Verfahren nach einem der Ansprüche 8 oder 9, **dadurch gekennzeichnet, dass** das zusätzliche Signal als Freigabesignal für eine Netzfreischaltung wenigstens einer Verstelleinrichtung verwendet wird.

10. Verfahren nach einem der Ansprüche 7 bis 9, d ad u rch gekennzeichnet, dass zeitgleich mit jedem Ausgangssignal der Bedieneinrichtung mindestens ein Steuersignal unmittelbar erzeugt wird, welches eine Freigabe oder Sperrung der Spannungsversorgung wenigstens einer, vorzugsweise aller Verstelleinrichtungen bewirkt.
